(19) **Europäisches Patentamt**
**European Patent Office**
**Office européen des brevets**

(11) **EP 4 450 595 A1**

(12) **EUROPEAN PATENT APPLICATION**

(43) Date of publication:
**23.10.2024  Bulletin 2024/43**

(21) Application number: **24163089.6**

(22) Date of filing: **13.03.2024**

(51) International Patent Classification (IPC):
*C10G 1/00* (2006.01)       *C10G 1/10* (2006.01)
*C10G 25/00* (2006.01)      *C10G 31/09* (2006.01)
*C10G 31/08* (2006.01)      *C10G 67/14* (2006.01)

(52) Cooperative Patent Classification (CPC):
**C10G 1/002; C10G 1/10; C10G 25/003;**
**C10G 31/08; C10G 31/09; C10G 67/14;**
C10G 2300/1003

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.04.2023  KR 20230051637**
**21.09.2023  KR 20230126339**

(71) Applicants:
• **SK Innovation Co., Ltd.**
**Seoul 03188 (KR)**
• **SK Geo Centric Co., Ltd.**
**Jongno-gu**
**Seoul 03161 (KR)**

(72) Inventors:
• **JO, Sang Hwan**
**34124 Daejeon (KR)**
• **KANG, Soo Kil**
**34124 Daejeon (KR)**
• **KIM, Yong Woon**
**34124 Daejeon (KR)**
• **PARK, Min Gyoo**
**34124 Daejeon (KR)**
• **SHIN, Min Woo**
**34124 Daejeon (KR)**
• **JANG, Jin Seong**
**34124 Daejeon (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **METHOD AND SYSTEM FOR PRODUCING REFINED HYDROCARBONS FROM WASTE PLASTICS**

(57) The present invention relates to a method for producing refined hydrocarbons from waste plastics, the method including: a pretreatment process; a pyrolysis process; a lightening process; a dehydration process; a hydrotreating process; and a distillation process. Further, the present invention relates to a system for producing refined hydrocarbons from waste plastics

FIG. 2

EP 4 450 595 A1

## Description

### TECHNICAL FIELD

The present invention invention relates generally to a method and system for producing hydrocarbons from waste plastics. More particularly, the present invention relates to a method and system for producing refined hydrocarbons from waste plastics.

### BACKGROUND

Pyrolysis oil produced by a cracking or pyrolysis reaction of waste materials, such as waste plastic pyrolysis oil, may typically contain a large amount of impurities from the waste materials which may cause problems in the process itself such as corrosion of process equipment and may also end up in being emitted into the environment together with air pollutants such as $SO_x$ and $NO_x$ when the pyrolysis oil is used as fuel. In particular, a chlorine component is converted into hydrogen chloride, which has a risk of causing device corrosion during a high-temperature treatment process, and is also discharged in the environment. In addition, waste plastic pyrolysis oil may only be blended in a rather very limited amount with a high-value-added fuel such as gasoline or diesel oil because it has a higher content of impurities such as chlorine, nitrogen, and metals than oil produced from crude oil by a general method. Therefore, waste plastic pyrolysis oil needs to go through a refining process before it can be used in large quantities in a fuel mixture.

In the related art, impurities such as chlorine, nitrogen, and metals are removed through post-treatment processes such as a hydrodesulfurization (hydrotreating) process and a hydrogen chloride treatment process using an oil refining technique. However, since pyrolysis oil such as waste plastic pyrolysis oil has a high content of chlorine, problems such as equipment corrosion, abnormal reactions, and deterioration of product properties caused by an excessive amount of hydrogen chloride produced in the hydrodesulfurization process have been reported, and it is difficult to introduce non-pretreated pyrolysis oil to the hydrodesulfurization process.

In addition, as described in the conventional technology, when oil is allowed to react with hydrogen in the presence of a hydrotreating catalyst, a chlorine compound such as hydrogen chloride produced together with refined oil, and a nitrogen compound react with each other to form an ammonium salt ($NH_4Cl$) which can cause various process problems. Specifically, ammonium salt formation inside a reactor by the reaction of oil with hydrogen may cause reactor corrosion reduction in its durability. Ammonium salt formation may also cause various other process problems including, for example, unplanned differential pressure occurrences, and significant reduction in the process efficiency as a result of such differential pressure occurrences. Moreover, impurity particles in the waste plastic pyrolysis oil may adhere to the inside of the reactor and cause various process problems including in some instances shutting down the reactor.

Therefore, there is a need for improved methods for preventing or mitigating formation of ammonium salt ($NH_4Cl$) and for preventing impurity particles from adhering to the inside of a reactor in a refining process of waste plastic pyrolysis oil containing impurities including chlorine and nitrogen.

In addition, in order to secure economic feasibility in addition to impurity removal, it is required for waste plastic pyrolysis oil to be high-value added through yield improvement and lightening of the waste plastic pyrolysis oil.

Furthermore, there is a need to develop a technique for obtaining refined hydrocarbons having a high proportion of light hydrocarbons from the waste plastic pyrolysis oil.

### SUMMARY

The present invention aims to producing high-value-added pyrolysis oil having a high proportion of light hydrocarbons from waste plastics containing a large amount of impurities, and to obtaining refined hydrocarbons having a high proportion of light hydrocarbons therefrom.

The present invention further aims to improving a yield of the pyrolysis oil obtained from waste plastics.

The present invention yet further aims to producing high-value-added pyrolysis oil with reduced impurities from waste plastics containing a large amount of impurities, and to obtaining refined hydrocarbons with reduced impurities therefrom.

Also, the present invention aims to providing a method and system with a simplified process of producing refined hydrocarbons from waste plastics.

Still further, the present invention aims to producing high-value-added pyrolysis oil that may be used as a feedstock for blending with existing petroleum products or an oil refining process due to its excellent quality, and to obtaining refined hydrocarbons therefrom.

Another aim of the present invention is to provide a method and system for producing refined hydrocarbons from waste plastics that may minimize formation of an ammonium salt ($NH_4Cl$) from waste plastic pyrolysis oil containing impurities including chlorine and nitrogen.

Yet another aim of the present invention is to provide a method and system for producing refined hydrocarbons from waste plastics that have excellent refining efficiency and may implement a long-term operation because activity of a catalyst is maintained for a long time.

Still another aim of the present invention is to provide a method and system for producing refined hydrocarbons from waste plastics that may prevent an adhesion phenomenon of impurity particles.

Still further, the present invention aims to providing a method and system for producing, from waste plastics, refined hydrocarbons that have significantly low contents of impurities such as chlorine, nitrogen, oxygen, and metals, and olefins, and excellent quality, and thus, may be used as a feedstock for blending with existing petroleum products or oil refining and petrochemical processes.

Against the above, the present invention relates to a method for producing refined hydrocarbons from waste plastics, wherein the method includes: a pretreatment process of pretreating waste plastics; a pyrolysis process of producing pyrolysis gas by introducing the waste plastics pretreated in the pretreatment process into a pyrolysis reactor; a lightening process of producing pyrolysis oil by introducing the pyrolysis gas into a hot filter; a dehydration process of dehydrating a first mixed solution obtained by mixing the produced pyrolysis oil with washing water and a demulsifier by applying a voltage to the first mixed solution; a hydrotreating process of hydrotreating a second mixed solution obtained by mixing the dehydrated first mixed solution with a sulfur source to produce refined pyrolysis oil from which impurities are removed; and a distillation process of distilling the refined pyrolysis oil to obtain refined hydrocarbons, wherein a liquid condensed in the hot filter is re-introduced into the pyrolysis reactor.

The hot filter may be filled with beads.

The beads may include at least one selected from the group consisting of silica sand ($SiO_2$) and aluminum oxide ($Al_2O_3$).

A temperature gradient may be formed in the hot filter.

The temperature gradient may be formed by providing at least two heaters outside the hot filter.

The pyrolysis reactor may include at least two batch reactors.

The pyrolysis process may be performed by a switching operation of the at least two batch reactors.

The refined pyrolysis oil may be mixed with petroleum hydrocarbons and distilled as mixed oil.

The refined pyrolysis oil may be included in an amount of 50 wt% or less with respect to the total weight of the mixed oil.

The waste plastics may include at least one selected from the group consisting of polyethylene (PE), polypropylene (PP), polyethylene terephthalate (PET), polyvinyl chloride (PVC), and polystyrene (PS).

In the dehydration process, the pyrolysis oil may be mixed in a greater volume than the washing water.

In the dehydration process, the pyrolysis oil and the washing water may be mixed in the first mixed solution at a volume ratio of 1:0.001 to 0.5.

In the dehydration process, the pyrolysis oil and the demulsifier may be mixed in the first mixed solution at a volume ratio of 1:0.000001 to 0.001.

The demulsifier may be one or a mixture of two or more selected from the group consisting of polyethylene glycol, tert-butanol, acetone, alkylnaphthalene sulfonate, alkylbenzene sulfonate, a nonionic alkoxylated alkyl phenol resin, polyalkylene oxide, and polyoxyethylene sorbitan ester.

The invention further relates to a system for producing refined hydrocarbons from waste plastics, wherein the system includes: a pretreatment device configured for pretreating waste plastics; a pyrolysis reactor configured for receiving the waste plastics pretreated in the pretreatment device and for producing pyrolysis gas; a hot filter configured for receiving the pyrolysis gas and for producing pyrolysis oil; a connection pipe connecting the hot filter and the pyrolysis reactor so that a liquid condensed in the hot filter can be re-introduced into the pyrolysis reactor; a dehydration device configured for dehydrating a first mixed solution obtained by mixing the produced pyrolysis oil with washing water and a demulsifier by applying a voltage to the first mixed solution; a hydrotreating device configured for hydrotreating a second mixed solution obtained by mixing the dehydrated first mixed solution with a sulfur source to produce refined pyrolysis oil from which impurities are removed; and a distillation device configured for distilling the refined pyrolysis oil to obtain refined hydrocarbons.

The hot filter may be filled with beads.

The beads may include at least one selected from the group consisting of silica sand ($SiO_2$) and aluminum oxide ($Al_2O_3$).

The system may further include at least two heaters provided outside the hot filter.

Other features and aspects of the present invention will be apparent from the following detailed description, and the drawings of example embodiments of the present invention.

**BRIEF DESCRIPTION OF THE DRAWINGS**

FIG. 1 is a flow chart of a method for producing refined hydrocarbons from waste plastics according to an embodiment of the present invention.

FIG. 2 is a process diagram of a method for producing waste plastic pyrolysis oil according to an embodiment of the present invention.

FIG. 3 is a view of a hot filter according to an embodiment of the present invention.

FIG. 4 is a process diagram of a dehydration process and a hydrotreating process according to an embodiment of the present invention.

## DETAILED DESCRIPTION OF EMBODIMENTS

The advantages and features of the present invention disclosure and methods for accomplishing them will become apparent from various embodiments described below in detail with reference to the accompanying drawings.

Unless otherwise defined, a unit of "%" used in the present specification refers to "wt%".

In the present specification, the description "A to B" means "equal to or greater than A and equal to or less than B", unless defined otherwise.

In the present specification, the term "pyrolysis oil yield" refers to a weight ratio of oil to the total weight of oil, an aqueous by-product, a pyrolysis residue (char), and by-product gas among the products in the pyrolysis process.

The term "vertical electrode" used in the present specification may refer to an electrode erected in a vertical direction with respect to the ground, and the term "horizontal electrode" may refer to an electrode laid horizontally with respect to the ground.

The present invention relates to a method for producing refined hydrocarbons from waste plastics, the method including: a pretreatment process of pretreating waste plastics (P-101); a pyrolysis process of producing pyrolysis gas by introducing the waste plastics pretreated in the pretreatment process into a pyrolysis reactor (P-102); a lightening process of producing pyrolysis oil by introducing the pyrolysis gas into a hot filter(P-103); a dehydration process of dehydrating a first mixed solution obtained by mixing the produced pyrolysis oil with washing water and a demulsifier by applying a voltage to the first mixed solution(P-104); a hydrotreating process of hydrotreating a second mixed solution obtained by mixing the dehydrated first mixed solution with a sulfur source to produce refined pyrolysis oil from which impurities are removed(P-105); and a distillation process of distilling the refined pyrolysis oil to obtain refined hydrocarbons (P-106), wherein a liquid condensed in the hot filter is re-introduced into the pyrolysis reactor.

Therefore, in the method according to the present invention, high-value-added pyrolysis oil having a high proportion of light hydrocarbons may be produced from waste plastics containing a large amount of impurities, and refined hydrocarbons having a high proportion of light hydrocarbons may be obtained therefrom. In addition, a yield of the obtained pyrolysis oil may be significantly improved.

In addition, in the method according to the present invention, high-value-added pyrolysis oil with reduced impurities may be produced from waste plastics containing a large amount of impurities, and refined hydrocarbons with reduced impurities may be obtained therefrom.

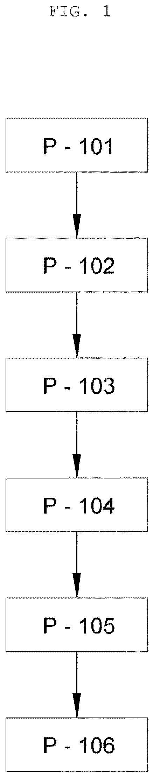

Referring now to Figures 1 to 4, a method for producing refined hydrocarbons from waste plastics according to an example embodiment of the present invention is described. Accordingly, a liquid condensed in a hot filter 15 is re-introduced into the pyrolysis reactor 14, such that cracking of heavy hydrocarbons in pyrolysis oil may be improved. Therefore, pyrolysis oil having a high proportion of light hydrocarbons may be produced, and refined hydrocarbons having a high proportion of light hydrocarbons may be obtained therefrom.

The hot filter 15 may be filled with beads. When the hot filter 15 is filled with beads, an inert effect and a heat transfer effect in the hot filter are maximized, which makes it possible to produce pyrolysis oil having a high proportion of light hydrocarbons. In addition, the pyrolysis oil yield may be improved.

The hot filter 15 may be filled with the beads in an amount of 50 vol% or more, 60 vol% or more, 70 vol% or more, 80 vol% or more, 85 vol% or more, 90 vol% or more, 95 vol% or less, 93 vol% or less, 91 vol% or less, 90 vol% or less, 89 vol% or less, 87 vol% or less, 85 vol% or less, 80 vol% or less, or a value between the above numerical values with respect to an internal volume of the hot filter. Specifically, the hot filter 15 may be filled with the beads in an amount of 70 to 95 vol%, 80 to 90 vol%, or 85 to 90 vol%, with respect to the internal volume of the hot filter.

A temperature gradient may be formed in the hot filter 15. When a temperature gradient is formed in the hot filter 15, the pyrolysis gas moving to the top of the hot filter and the liquid condensed to the bottom of the hot filter are efficiently circulated, which makes it possible to produce pyrolysis oil having a high proportion of light hydrocarbons. In addition, refined hydrocarbons having a high proportion of light hydrocarbons may be obtained therefrom. Further, the pyrolysis oil yield may be improved.

According to an embodiment, as for the temperature gradient, a temperature at the bottom of the hot filter may be higher than a temperature at the top of the hot filter. In some embodiments, as for the temperature gradient, the temperature at the bottom of the hot filter 15 may be higher than a temperature at the middle of the hot filter 15, and the temperature at the middle of the hot filter 15 may be higher than the temperature at the top of the hot filter 15. Accordingly, circulation efficiency and heat transfer efficiency in the hot filter may be improved.

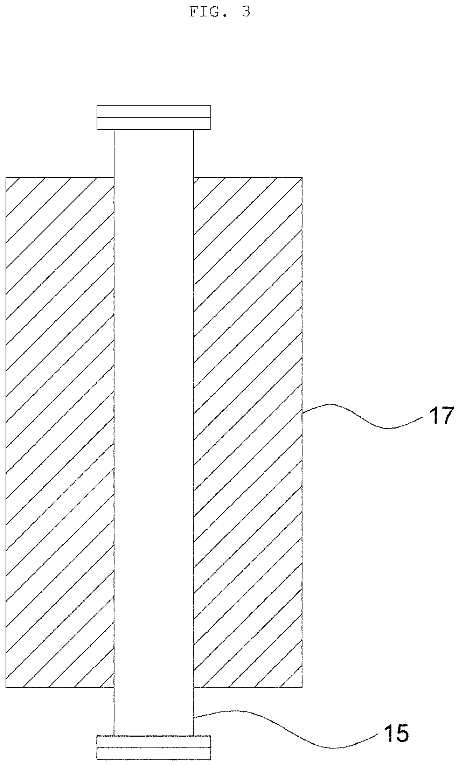

In some embodiments, the temperature gradient may be formed by providing at least two heaters 17 outside the hot filter 15.(See FIG. 3) In some embodiments, the temperature gradient may be formed by providing at least three heaters 17 outside the hot filter 15. When at least two heaters 17 are provided outside the hot filter 15, a temperature gradient of the hot filter 15 may be easily formed, and the temperatures at the top, middle, and bottom of the hot filter may be flexibly adjusted depending on operating conditions of the hot filter, such that a flexible process operation may be performed.

The temperature at the bottom of the hot filter may be 400°C or higher, 420°C or higher, 440°C or higher, 460°C or higher, 480°C or higher, 500°C or higher, 550°C or higher, or 600°C or higher.

The temperature at the top of the hot filter may be 600°C or lower, 550°C or lower, 500°C or lower, 480°C or lower, 460°C or lower, 440°C or lower, 420°C or lower, or 400°C or lower.

The temperature at the middle of the hot filter may be 300°C or higher and 600°C or lower, 400°C or higher and 600°C or lower, 400°C or higher and 500°C or lower, 420°C or higher and 480°C or lower, or 440°C or higher and 460°C or lower.

According to the method, the feedstock 11 of waste plastics is pretreated in a pretreatment process (P-101). In some embodiments, the pretreatment process is performed in an auger pretreatment reactor 13 and may include a two-step pretreatment process. In a first step (a), the waste plastics feedstock 11 is reacted with a neutralizing agent. In a second step (b) the product from the first step (a) pretreatment is reacted with a copper compound. Accordingly, in the pretreatment process, a waste plastic raw material may be treated for reducing the content of chlorine ("Cl") to a level that may be introduced into an oil refining process.

For example, in some embodiments, in the second pretreatment step (b), an additive or a neutralizing agent such as a metal oxide or zeolite other than a copper compound may be used. For example, the metal oxide may be in the form of a divalent metal oxide.

The waste plastics may include at least one selected from the group consisting of polyethylene (PE), polypropylene (PP), polyethylene terephthalate (PET), polyvinyl chloride (PVC), and polystyrene (PS). The waste plastics may include organic chlorine (organic Cl), inorganic chlorine (inorganic Cl), and aromatic chlorine (aromatic Cl), and a content of chlorine in the waste plastics may be 10 ppm or more, 50 ppm or more, 100 ppm or more, or 100 to 1,000 ppm. Pyrolysis oil produced through a cracking or pyrolysis reaction of waste plastics, such as waste plastic pyrolysis oil, contains a large amount of impurities caused by waste plastics. In particular, it is necessary to pretreat pyrolysis oil to remove a chlorine component such as organic/inorganic chlorine. The waste plastics may be divided into domestic waste plastic and industrial waste plastic. The domestic waste plastic is a plastic in which PVC, PS, PET, PBT, and the like in addition to PE and PP are mixed, and may refer to a mixed waste plastic containing 3 wt% or more of PVC together with PE and PP. Since chlorine derived from PVC has a high ratio of organic Cl and inorganic Cl, Cl in domestic waste plastic may be removed with high efficiency even with an inexpensive neutralizing agent (Ca-based, Zn-based, or Al-based) or the like. PE/PP accounts for most industrial waste plastic, but a content of organic Cl originating from an adhesive or a dye component is high, and in particular, a ratio of Cl (aromatic chlorine) contained in an aromatic ring is high, which makes it difficult to remove Cl with the common low-cost neutralizing agent described above.

In the present invention, chlorine is preferably removed in an amount of 95 wt% or more, 97 wt% or more, 98 wt% or more, or 99 wt% or more with respect to the total weight of chlorine contained in waste plastics. Chlorine may be removed from the aromatic ring.

The pretreatment step (a) involves reacting waste plastics with a neutralizing agent, and a large amount of hydrogen chloride generated during melting and thermal decomposition of PVC and the like may be removed in the form of a neutralizing salt.

The neutralizing agent may be oxide, hydroxide, and carbonate of a metal, or a combination thereof, and the metal may be calcium, aluminum, magnesium, zinc, copper, iron, or a combination thereof. Specifically, the neutralizing agent may be copper oxide, aluminum oxide, calcium oxide, magnesium oxide, zinc oxide, or iron oxide. The neutralizing agent may contain a zeolite component. Specifically, the neutralizing agent may contain a waste fluid catalytic cracking (FCC) catalyst (E-cat) containing a zeolite component, and may further contain a waste FCC catalyst in the metal oxide. Specifically, the neutralizing agent may be calcium oxide, a waste FCC catalyst, copper metal, or copper oxide, or may be calcium oxide.

In an embodiment, the neutralizing agent may be added during the pyrolysis process.

The neutralizing agent may be mixed in an amount of 0.5 to 20 wt%, 1 to 10 wt%, or 1 to 5 wt%, with respect to the total weight of the waste plastics. In addition, the neutralizing agent may be mixed at a molar ratio ($N_M/N_{Cl}$) of a metal element (M) of the neutralizing agent to a total chlorine element (Cl) in the waste plastics of 1 to 25, specifically, 0.7 to 15, and more specifically, 0.5 to 5.

Meanwhile, the number of moles of total chlorine elements (Cl) in the waste plastics may refer to a total number of moles of chlorine elements in a waste plastic solid raw material before pretreatment and pyrolysis.

In the chlorine removal in the pretreatment step (a), a ratio ($C_1/C$) of the weight content of chlorine in the product in the pretreatment step (a) ($C_1$) to the weight content of chlorine in the waste plastics (C) may be 50% or less, 40% or less, or 20 to 30%. Chlorine remaining in waste plastics after the pretreatment step (a) may be effectively removed in the pretreatment step (b).

The pretreatment step (b) is a step of reacting the product in the pretreatment step (a) with a copper compound, and a small amount of organic chlorine and aromatic chlorine not removed in the pretreatment step (a) may be removed with a copper compound which may be used as catalyst. When a copper compound is used together with the neutralizing agent in the pretreatment step (a) or is used as a substitute for the neutralizing agent, the copper compound first reacts with chlorine and inorganic chlorine (hydrogen chloride) located at the end of the hydrocarbon chain among organic chlorines, which makes it difficult for the copper compound to come into contact with aromatic chlorine or the like, which is difficult to remove with a neutralizing agent. In addition, since the initial pyrolysis performed by raising the temperature inside the reactor for pretreatment or pyrolysis starts at a relatively low temperature (250 to 300°C), and at this time, hydrogen chloride begins to be generated, chlorine may be first removed with a neutralizing agent. Thereafter, when pyrolysis proceeds and the temperature is relatively high, a removal reaction of aromatic chlorine is activated. Therefore, it is effective to first remove organic Cl and inorganic Cl with hydrogen chloride using a neutralizing agent, and then remove aromatic chlorine with a copper compound.

The copper compound may include at least one selected from the group consisting of copper metal (Cu), copper oxide (CuO), copper hydroxide ($Cu(OH)_2$), and copper carbonate ($CuCO_3$), and specifically, copper metal (Cu) and/or copper oxide (CuO).

The copper compound may be mixed in an amount of 0.1 to 20 wt%, 0.5 to 10 wt%, or 1 to 5 wt%, with respect to the total weight of the product in the pretreatment step (a). In addition, the copper compound may be mixed at a molar ratio ($N_{Cu}/N_{Cl}$) of a copper element (Cu) of the copper compound to the total chlorine element (Cl) in the waste plastics of 1 to 10, specifically, 0.7 to 5, and more specifically, 0.5 to 3.

Meanwhile, a total number of moles of chlorine element (Cl) in the waste plastics may refer to a total number of moles of chlorine element in a waste plastic solid raw material before pretreatment and pyrolysis.

In the chlorine removal in the pretreatment step (b), a ratio ($C_2$/C) of the weight content of chlorine in the product in the pretreatment step (b) ($C_1$) to the weight content of chlorine in the waste plastics (C) may be 10% or less, 5% or less, or 0.5 to 3%.

According to an embodiment, the pretreatment step (a) may be performed at a temperature of 200 to 320°C, and the pretreatment step (b) may be performed at a temperature of 400 to 550°C. When the steps a) and b) are performed in the temperature ranges, respectively, chlorine in the waste plastics may be effectively removed.

According to an embodiment, in the pyrolysis process (P-102), a pretreatment step (a) of reacting waste plastics with a neutralizing agent; and a pretreatment step (b) of reacting a product in the pretreatment step (a) with a copper compound may be performed.

In an embodiment, the pretreatment process may further include a crushing process of crushing waste plastics by introducing waste plastics into a feedstock injection part 12. The crushing of the waste plastics may be performed by applying a crushing process known in the art. For example, waste plastics may be introduced into a pretreatment reactor and heated to about 300°C to produce a hydrocarbon flow precursor in the form of pellets.

According to an embodiment, the crushing process may be performed at room temperature.

In an embodiment, in the crushing process, the waste plastics and the neutralizing agent may be mixed, and the mixture may be introduced into a pretreatment reactor. When the waste plastics and calcium oxide as the neutralizing agent are mixed and crushed at room temperature, a mechanochemical reaction occurs to generate hydrocarbons and CaOHCl, and therefore, chlorine in the waste plastic raw material may be stably maintained in the form of CaOHCl.

Subsequently, in the pretreatment process, the crushed waste plastics may be introduced into the pretreatment reactor and heated, and the solid waste plastic raw material may be physically and chemically treated to remove chlorine, thereby producing a hydrocarbon flow precursor (pyrolysis raw material) . The hydrocarbon flow precursor may mean a waste plastic melt, and the waste plastic melt may mean that all or a part of crushed or uncrushed solid waste plastics is converted into liquid waste plastic.

As an example, in the pretreatment process, each of the crushed or uncrushed waste plastics and the neutralizing agent may be introduced into the pretreatment reactor and heated. In addition, in the pretreatment process, the crushed or uncrushed waste plastics and the neutralizing agent may be introduced into the pretreatment reactor, and then a first pretreatment (heating) may be performed, and subsequently, a copper compound may be introduced into the pretreatment reactor, and then a second pretreatment (heating) may be performed.

The heating may be performed at a temperature of 200 to 320°C and normal pressure. Specifically, the heating may be performed at a temperature of 250 to 320°C or 280 to 300°C. In general, the pretreatment temperature of the waste plastics is at least 250°C, but hydrocarbons after the dechlorination may be easily pretreated even at a lower temperature of 200°C to generate hydrogen or methane gas.

The pretreatment reactor may be an extruder, an autoclave reactor, a batch reactor, or the like, and may be, for example, an auger reactor.

The pyrolysis process (P-102) may be performed by introducing pyrolysis raw materials classified into three material phases into the pyrolysis reactor 14, and specifically, may be a process of introducing the non-pretreated or pretreated waste plastics into the pyrolysis reactor 14 and heating the reactor. The three material pashes include a gas phase, a liquid phase such as a combination of oil, wax, water, and a solid phase.

In an embodiment, the pyrolysis process (P-102) may be performed by mixing pretreated waste plastics and a copper compound, introducing the mixture into a pyrolysis reactor 14, and heating the mixture. In addition, in the pyrolysis process, a first pyrolysis is performed by mixing waste plastics and a neutralizing agent, introducing the mixture into a pyrolysis reactor, and heating the mixture, and then a second pyrolysis is performed by introducing a copper compound into the pyrolysis reactor and performing heating, and at least two times of pyrolysis may be performed continuously or discontinuously.

The heating may be performed at a temperature of 320 to 900°C, specifically, 350 to 700°C, and more specifically, 400 to 550°C, in a non-oxidizing atmosphere. In addition, the heating may be performed at normal pressure. The non-oxidizing atmosphere is an atmosphere in which waste plastics do not oxidize (combust), and may be, for example, an atmosphere in which an oxygen concentration is adjusted to 1 vol% or less, or an atmosphere of an inert gas such as nitrogen, water vapor, carbon dioxide, or argon.

When the heating temperature is 400°C or higher, fusion of chlorine-containing plastics may be prevented, and conversely, when the heating temperature is 550°C or lower, chlorine in waste plastics may remain in a pyrolysis residue (char) in the form of $CaCl_2$, $CuCl_2$, or the like.

The pyrolysis may be performed in an autoclave reactor, a batch reactor, a fluidized-bed reactor, a packed-bed reactor, or the like, and specifically, any reactor capable of controlling stirring and a rise in temperature may be applied. According to an embodiment, the pyrolysis may be performed in a batch reactor.

According to an embodiment, the pyrolysis reactor 14 may include at least two batch reactors.

According to an embodiment, the pyrolysis process may be performed by a switching operation of the at least two batch reactors. Accordingly, the pyrolysis process may secure process continuity even at a high temperature.

In an embodiment, the pyrolysis process or the lightening process (P-103) may further include at least one process selected from the group consisting of a pyrolysis gas recovery process of recovering pyrolysis gas from a gas phase pyrolysis raw material and a liquid phase pyrolysis raw material through pyrolysis and a separation process of separating a solid phase pyrolysis raw material into fine particles and coarse particles.

In the pyrolysis gas recovery process, pyrolysis gas containing low-boiling-point hydrocarbon compounds such as methane, ethane, and propane in the gas phase generated in the pyrolysis process or the lightening process is recovered. The pyrolysis gas may generally contain combustible materials such as hydrogen, carbon monoxide, and low-molecular-weight hydrocarbon compounds. Examples of the hydrocarbon compounds include methane, ethane, ethylene, propane, propene, butane, and butene. Such pyrolysis gas contains a combustible material and may be used as fuel.

In the separation process, solid phase product from the pyrolysis process or the lightening process, for example, carbides, the neutralizing agent, and/or the copper compound may be separated into fine particles and coarse particles. Specifically, classification is performed using a sieve having a size smaller than an average particle diameter of the chlorine-containing plastics and larger than an average particle diameter of the neutralizing agent or the copper compound, such that the solid content generated by the pyrolysis reaction may be separated into fine particles and coarse particles. In the separation process, the solid content may be separated into fine particles containing a relatively large amount of the chlorine-containing neutralizing agent and the copper compound, and coarse particles containing a relatively large amount of carbides. The fine particles and carbides may be retreated as necessary, reused in the pyrolysis process, used as fuel, or disposed of as waste.

According to an embodiment, the hot filter 15 may be filled with at least one selected from the group consisting of beads and a neutralizing agent.

According to another embodiment, the hot filter 15 may be filled with beads. When the hot filter is filled with beads, an inert effect and a heat exchange effect in the hot filter are maximized, which makes it possible to produce pyrolysis oil having a high proportion of light hydrocarbons.

According to an embodiment, the beads may include at least one selected from the group consisting of silica sand ($SiO_2$) and aluminum oxide ($Al_2O_3$). Specifically, when the beads include silica sand ($SiO_2$), the inert effect and the heat exchange effect in the hot filter may be maximized, and a stable process operation may be performed without wear even during a long-term high-temperature operation.

According to an embodiment, the beads may be glass beads.

According to an embodiment, a diameter of the bead may be 0.1 mm or more, 1 mm or more, 1.5 or more, 2 mm or more, 2.5 mm or more, 3 mm or more, 10 mm or less, 8 mm or less, 6 mm or less, 4 mm or less, 3.5 mm or less, 3 mm or less, 2.5 mm or less, 2 mm or less, or a value between the above numerical values, and specifically, may be 1 mm to 5 mm, 2 mm to 4 mm, or 2.5 mm to 3.5 mm. When the hot filter is filled with beads having the particle size described above, such that lightening of oil may be achieved by adjusting a gas hourly space velocity (GHSV) of the pyrolysis gas, process operation efficiency may be improved due to suppression of a differential pressure in the hot filter.

According to an embodiment, in the lightening process, pyrolysis oil may be produced by introducing the pyrolysis gas into the hot filter filled with a neutralizing agent.

The lightening process (P-103) may be performed in an oxygen-free atmosphere at a temperature of 400 to 550°C and a pressure of normal pressure to 0.5 bar, and the oxygen-free atmosphere may be an inert gas atmosphere or a closed system atmosphere without oxygen. In the above recited temperature range of the lightening process, the lightening of the pyrolysis gas is performed well, such that clogging and a differential pressure caused by wax may be suppressed.

Meanwhile, in the lightening process, a gas hourly space velocity (GHSV) may be 0.3 to 1.2/hr or 0.5 to 0.8/hr. Accordingly, it is possible to lighten a waste plastic pyrolyzed product and reduce impurities (Cl and the like) without performing an additional post-treatment process, and it is possible to produce pyrolysis oil having a high proportion of light hydrocarbons and refined hydrocarbons having a high proportion of light hydrocarbons as intended in the present invention by adjusting the GHSV of the pyrolysis gas.

The neutralizing agent filled in the hot filter 15 may have a particle size of 400 to 900 pm, or may have a particle size of 500 to 800 $\mu$m. Under the operating conditions in the lightening process of the present invention, the hot filter is filled with the neutralizing agent having the particle size described above, such that lightening of oil may be achieved by adjusting the GHSV of the pyrolysis gas, and process operation efficiency may be improved due to suppression of a differential pressure in the hot filter.

Meanwhile, the particle size may refer to D50, and D50 refers to a particle diameter when a cumulative volume from a small particle size accounts for 50% in measuring a particle size distribution by a laser scattering method. In this case, as for D50, the particle size distribution may be measured by collecting the sample from the prepared carbonaceous material according to KS A ISO 13320-1 standard using Mastersizer 3000 manufactured by Malvern Panalytical Ltd. Specifically, ethanol may be used as a solvent, and if necessary, the ethanol may be dispersed using an ultrasonic disperser, and then, a volume density may be measured.

According to an embodiment, the hot filter 15 may be filled with the beads and the neutralizing agent.

The hot filter 15 generally serves to separate gas and a residue (char) among products in the pyrolysis process (P-102) in the art. However, in the present invention, the hot filter 15 which is filled with at least one selected from the group consisting of beads and a neutralizing agent is applied for removal of impurities such as chlorine as well as lightening, and therefore, as described above, operating conditions such as a temperature of the hot filter and a particle size of the neutralizing agent are adjusted to specific ranges.

The lightening process may satisfy the following Relational Expressions 1 and 2.

$$[\text{Relational Expression 1}]$$

$$50 < (A_2-A_1)/A_1 \ (\%) < 100$$

$$[\text{Relational Expression 2}]$$

$$-80 < (B_2-B_1/B_1) \ (\%) < -50$$

In Relational Expression 1, $A_1$ represents a total weight percentage (wt%) of naphtha (boiling point of 150°C or lower) and kerosene (boiling point of 150 to 265°C) of the pyrolysis gas, and $A_2$ represents a total weight percentage (wt%) of naphtha (bp of 150°C or lower) and kerosene (bp of 150 to 265°C) of the pyrolysis oil, and in Relational Expression 2, $B_1$ represents a content (ppm) of chlorine in the pyrolysis gas, and $B_2$ represents a content (ppm) of chlorine in the pyrolysis oil.

Specifically, Relational Expressions 1 and 2 may be $60 < (A_2-A_1)/A_1 \ (\%) < 90$, $65 < (A_2-A_1)/A_1 \ (\%) < 85$, or $70 < (A_2-A_1)/A_1 \ (\%) < 80$, and $-75 < (B_2-B_1/B_1) \ (\%) < -55$, $-70 < (B_2-B_1/B_1) \ (\%) < -55$, or $-65 < (B_2-B_1/B_1) \ (\%) < -55$, respectively.

Relational Expressions 1 and 2 numerically represent a degree of weight of the waste plastic pyrolyzed product when the hot filter filled with at least one selected from the group consisting of beads and a neutralizing agent of the present invention is used. The present invention has a technical feature of producing pyrolysis oil having a high proportion of light hydrocarbons by controlling the oil composition and the content of chlorine in the pyrolysis gas introduced into the hot filter and the organic/inorganic materials containing chlorine.

The pyrolysis oil produced in the lightening process may include, with respect to the total weight, 30 to 50 wt% of naphtha (bp of 150°C or lower), 30 to 50 wt% of kerosene (bp of 150 to 265°C), 10 to 30 wt% of light gas oil (LGO) (bp of 265 to 380°C), and 0 to 10 wt% of UCO-2/AR (bp of 380°C or higher), and specifically, may include 35 to 50 wt% of naphtha (bp of 150°C or lower), 35 to 50 wt% of kerosene (bp of 150 to 265°C), 10 to 30 wt% of light gas oil (LGO) (bp of 265 to 380°C), and 0 to 8 wt% of UCO-2/AR (bp of 380°C or higher) or 35 to 45 wt% of naphtha (bp of 150°C or lower), 35 to 45 wt% of kerosene (bp of 150 to 265°C), 10 to 20 wt% of light gas oil (LGO) (bp of 265 to 380°C), and 0 to 6 wt% of UCO-2/AR (bp of 380°C or higher). In addition, in the pyrolysis gas, a weight ratio of light oils (the sum of naphtha and kerosene) to heavy oils (the sum of LGO and UCO-2/AR) may be 2.5 to 5, 2.5 to 4, or 3 to 3.8.

In the pyrolysis oil produced in the lightening process, a total content of chlorine may be less than 100 ppm, 80 ppm or less, 60 ppm or less, 5 to 50 ppm, or 10 to 50 ppm, with respect to the total weight, and a content of organic chlorine may be less than 90 ppm, 70 ppm or less, 50 ppm or less, 5 to 50 ppm, or 5 to 40 ppm, with respect to the total weight.

According to an embodiment, the pyrolysis process and the lightening process may satisfy the following Relational Expression 3.

$$[Relational\ Expression\ 3]$$

$$0.7 < T_2/T_1 < 1.3$$

In Expression 3, $T_1$ and $T_2$ are temperatures at which the pyrolysis process and the lightening process are performed.

In a case where the pyrolysis process and the lightening process are performed so that the $T_2/T_1$ value satisfies 0.7 or less, the temperature of the pyrolysis process may be relatively high, or the temperature of the lightening process may be relatively low. In this case, a ratio of pyrolysis oil that is condensed in the hot filter and then circulated to the pyrolysis reactor increases, and thus, a final boiling point of the pyrolysis oil may be excessively low. On the other hand, the pyrolysis process and the lightening process are performed so that the $T_2/T_1$ value satisfies 1.3 or more, a loss ratio of the pyrolysis oil in a gas phase may excessively increase, and thus, the pyrolysis oil yield may be reduced.

Specifically, $T_2/T_1$ may be, for example, 0.7 to 1.2, 0.8 to 1.2, 0.8 to 1.1, 0.9 to 1.1, or 1. Therefore, the effects described above may be further improved.

The dehydration process (P-104) according to an embodiment of the present invention may be a step of dehydrating a first mixed solution obtained by mixing pyrolysis oil, washing water, and a demulsifier by applying a voltage to the first mixed solution.

The pyrolysis oil contains moisture, and moisture in pyrolysis oil may cause problems such as deactivation of a hydrotreating catalyst and corrosion of a reactor. In addition, since water-soluble impurities are contained in moisture, it is required to remove moisture. Moisture present in the form of an emulsion in waste plastic pyrolysis oil may be easily removed by performing the dehydration process (P-104) in a dehydrator 22.

The pyrolysis oil according to an embodiment of the present invention may be a mixture of hydrocarbon oils produced by pyrolyzing waste plastics, and in this case, the waste plastics may include solid or liquid wastes related to synthetic polymer compounds such as waste synthetic resins, waste synthetic fibers, waste synthetic rubber, and waste vinyl.

The mixture of hydrocarbon oils according to an embodiment of the present invention may contain impurities such as a chlorine compound, a nitrogen compound, an oxygen compound, a metal compound, and char-derived particles, in addition to the hydrocarbon oils, may contain impurities in the form of compounds in which chlorine, nitrogen, oxygen, or a metal is bonded to hydrocarbons, and may contain paraffinic, olefinic, naphthenic, or aromatic hydrocarbons.

The washing water according to an embodiment of the present invention may serve to increase the probability of contact between emulsion-type moisture present in the pyrolysis oil. In addition, a basic compound may be added to the washing water to remove a water-soluble acidic material contained in moisture, and the basic compound may be sodium hydroxide (NaOH).

The plastic pyrolysis oil according to an embodiment of the present invention may be mixed in a greater volume than the washing water, and specifically, the pyrolysis oil and the washing water may be mixed in the first mixed solution at a volume ratio of 1:0.001 to 0.5, more specifically, 1:0.005 to 0.4, and most specifically, 1:0.01 to 0.3. When the volume ratio satisfies the above range, water washing is sufficiently performed, and thus, impurities in the pyrolysis oil may be significantly reduced, and costs required to remove washing water to be mixed may be minimized.

The demulsifier according to an embodiment of the present invention may be one or a mixture of two or more selected from the group consisting of polyethylene glycol, tert-butanol, acetone, alkylnaphthalene sulfonate, alkylbenzene sulfonate, a nonionic alkoxylated alkyl phenol resin, polyalkylene oxide, and polyoxyethylene sorbitan ester.

In the first mixed solution according to an embodiment of the present invention, the pyrolysis oil and the demulsifier may be mixed in a dehydration process (P-104) at a volume ratio of 1:0.000001 to 0.001, specifically, 1:0.000002 to 0.0005, and more specifically, 1:0.000003 to 0.0001. When the volume ratio satisfies the above range, the emulsion may be decomposed with minimal impact on the quality of pyrolysis oil.

The demulsifier according to an embodiment of the present invention may have a weight average molecular weight of 200 to 2,000, specifically, 300 to 1,000, and more specifically, 400 to 800. When the weight average molecular weight satisfies the above range, it is easy to mix the demulsifier with the pyrolysis oil and the washing water under conditions where the dehydration process is performed, and thus, the decomposition efficiency of the moisture emulsion is increased.

The moisture in the form of an emulsion contained in the first mixed solution in which the pyrolysis oil, the washing water, and the demulsifier are mixed is still difficult to remove because it is stable. Therefore, a voltage may be applied to the first mixed solution to facilitate removal of moisture.

The voltage according to an embodiment of the present invention may be applied as an alternating current or a combination of an alternating current and a direct current. Some impurity particles contained in the pyrolysis oil have polarities, and therefore, and when a direct current voltage is applied, polarized impurity particles are accumulated on a specific electrode, and when the process is performed for a long period of time, the impurities may adhere to the electrode. However, when an alternating current voltage is applied, the polarity of the electrode changes periodically, and therefore, the adhesion phenomenon of the impurity particles may be prevented. In addition, a frequency of the alternating current may be a single frequency or a combination of two or more frequencies. In an embodiment, in the case of the single frequency, an alternating current with a frequency of 60 Hz may be applied, and in the case of the combination of two or more frequencies, alternating currents with frequencies of 50 Hz and 60 Hz may be applied alternately.

The voltage may be applied through a vertical electrode. In a case where the impurity particles are accumulated on the electrode during a mixed solution preparation process or a voltage application process, when the impurities particles are not artificially washed, the impurity particles may adhere to the electrode after a long period of time. However, when a vertical electrode is used, the adhesion phenomenon of the impurity particles may be prevented in advance because the impurity particles are not accumulated on the electrode but fall to the bottom of the reactor due to gravity even without an additional washing operation.

A magnitude of the voltage according may be 0.1 to 50 kV, specifically, 1 to 30 kV, and more specifically, 5 to 20 kV.

In an embodiment, the dehydration may be performed such that, after the application of the voltage, water may be removed by draining a water layer which is oil-water separated. Water may also be removed in a gas-liquid separator.

Metal impurities in the pyrolysis oil stabilize the emulsion, hinder oil-water separation, and help form a stable emulsion layer, commonly called a rag layer. Such a rag layer may be formed between a desalinated oil layer at an upper portion of the first mixed solution and a water layer at a lower portion of the first mixed solution, and may be gradually thickened during a continuous dehydration process. An excessively thickened rag layer may be discharged to an equipment at the hydrotreating process together with the desalinated oil. This reduces the desalination effect of the desalinated oil and reduces the efficiency of the process. In addition, the rag layer may be discharged together with water and may cause problems in a wastewater treatment process. Therefore, the rag layer formed between the desalinated oil layer and the water layer may be removed.

Therefore, the method for producing refined hydrocarbons from waste plastics according to the present invention may further include, after the application of the voltage in the dehydration process (P-104), removing a rag layer from the first mixed solution. The removal of the rag layer may be performed through a pipe penetrating through a wall of a dehydrator 22 and connected to the outside after measuring a change in density of the mixed solution by a density meter in the dehydrator to determine a formation location and a thickness of the rag layer.

In the dehydration process (P-104), after dehydrating the first mixed solution, the dehydrated first mixed solution may be additionally dehydrated by condensation of moisture.

The additional dehydration may be performed by supplying the dehydrated first mixed solution to a coalescer. Specifically, the residual moisture contained in the dehydrated first mixed solution may be removed through condensation by a collection filter in the coalescer. As the content of moisture in the waste plastic pyrolysis oil is further reduced through the additional dehydration, deactivation of the catalyst due to moisture may be prevented, and the process stability and the quality of refined pyrolysis oil may be improved.

A ratio of a content of moisture in the pyrolysis oil to a content of moisture in the dehydrated first mixed solution may be 1:0.0001 to 0.9, specifically, 1:0.0005 to 0.5, and more specifically, 1:0.001 to 0.1. When the ratio satisfies the above range, a risk of trouble occurring in subsequent processes such as hydrotreating may be significantly reduced, and high-quality refined pyrolysis oil that meets specifications may be produced as a feedstock for blending or oil refining and petrochemical processes.

The dehydration process (P-104) may be performed at a pressure of 50 bar or less. When the dehydration process is performed at a pressure of 50 bar or less, moisture in the pyrolysis oil may be easily removed, and the process stability may be secured. Specifically, the dehydration process may be performed at a pressure of 30 bar or less, more specifically, 20 bar or less, and/or 5 bar or more.

The dehydration process (P-104) may be performed at a temperature of 20°C to 300°C. When the temperature satisfies the above range, the decomposition of the emulsion and the condensation of moisture are smoothly performed, and thus, the dehydration efficiency may be improved. Specifically, the dehydration process may be performed at a temperature of 50°C to 250°C, and more specifically, 80°C to 200°C.

In order to improve the dehydration efficiency in the dehydration process, one or more additional processes selected from the group consisting of centrifugation and distillation may be performed before and/or after the dehydration.

The hydrotreating process (P-105) may be a step of hydrotreating a second mixed solution obtained by mixing the dehydrated first mixed solution with a sulfur source to produce refined pyrolysis oil from which impurities are removed.

The second mixed solution may have a concentration of chlorine (Cl) of 10 ppm or more, specifically, 100 ppm or more, more specifically, 200 ppm or more, and/or 3,000 ppm or less as an upper limit.

In the second mixed solution, a weight ratio of nitrogen to chlorine may be 1:0.1 to 10, specifically, 1:0.5 to 5, and more specifically, 1:1 to 2, but the above weight ratio is only a specific example of what may be included in the pyrolysis oil.

The hydrotreating may be performed under a condition in which a ratio of hydrogen to the second mixed solution may be 100 $Nm^3/Sm^3$ to 5,000 $Nm^3/Sm^3$, specifically, 500 $Nm^3/Sm^3$ to 3,000 $Nm^3/Sm^3$, and more specifically, 1,000 $Nm^3/Sm^3$ to 1,500 $Nm^3/Sm^3$. When this is satisfied, impurities may be effectively removed, the high activity of the hydrotreating catalyst may be maintained for a long period of time, and the process efficiency may be improved.

The sulfur source refers to a sulfur source capable of continuously supplying a sulfur component during the refining process.

In the hydrotreating process (P-105), the second mixed solution containing the sulfur source is prepared, such that during the refining process, deactivation of a molybdenum-based hydrotreating catalyst due to lack of the sulfur source and high-temperature operation may be suppressed, and the catalytic activity may be maintained.

The sulfur source may include sulfur-containing oil. The sulfur-containing oil refers to oil composed of hydrocarbons containing sulfur obtained from crude oil as a feedstock. The sulfur-containing oil may be, for example, light gas oil, straight-run naphtha, vacuum naphtha, pyrolysis naphtha, straight-run kerosene, vacuum kerosene, pyrolysis kerosene, straight-run gas oil, vacuum gas oil, pyrolysis gas oil, sulfur-containing waste tire oil, and any mixture thereof.

When waste tire oil is included as the sulfur-containing oil, a high content of sulfur contained in waste tires may be converted into oil together with hydrocarbons and may serve as a sulfur source for the waste plastic pyrolysis oil. In addition, diverting the waste tire oil into the sulfur source for the waste plastic pyrolysis oil may reduce the environmental load by recycling of waste tires and maintaining the catalytic activity for a long period of time.

Specifically, the sulfur-containing oil may be light gas oil (LGO) with a gravity of 0.7 to 1. When this sulfur-containing oil is used, the sulfur-containing oil may be uniformly mixed with the dehydrated first mixed solution, and high hydrotreating efficiency may be exhibited. Specifically, the gravity may be 0.75 to 0.95, and more specifically, 0.8 to 0.9. The sulfur-containing oil may contain 100 ppm or more of sulfur. When the sulfur component is contained in an amount of less than 100 ppm, a content of the sulfur component supplied is small, such that the effect of preventing deactivation of the molybdenum-based hydrotreating catalyst may be insufficient. Specifically, the sulfur component may be contained in an amount of 800 ppm or more, more specifically, 8,000 ppm or more, and/or 200,000 ppm or less.

The second mixed solution may contain 100 ppm or more of sulfur. As in the case of the sulfur-containing oil, when the sulfur component is contained in the second mixed solution in an amount of less than 100 ppm, the content of the sulfur component supplied is small, such that the effect of preventing deactivation of the molybdenum-based hydrotreating catalyst may be insufficient. Specifically, the sulfur component may be contained in an amount of 800 ppm or more, more specifically, 8,000 ppm or more, and/or 200,000 ppm or less.

The sulfur-containing oil may be included in an amount of less than 0.5 parts by weight with respect to 100 parts by weight of the first mixed solution dehydrated in the dehydration process. Specifically, the sulfur-containing oil may be contained in an amount of less than 0.1 parts by weight, more specifically, less than 0.05 parts by weight, and/or more than 0.01 parts by weight. As the sulfur-containing oil is included in an amount of less than 0.5 parts by weight, the concentration of chlorine (Cl) or nitrogen (N) contained in the waste plastic pyrolysis oil is diluted, such that a formation rate of an ammonium salt ($NH_4Cl$) may be controlled, and the process stability may be improved.

The sulfur source may include one or two or more sulfur-containing organic compounds selected from a disulfide-based compound, a sulfide-based compound, a sulfonate-based compound, and a sulfate-based compound. Specifically, the sulfur source may include one or a mixture of two or more selected from dimethyl disulfide, dimethyl sulfide, polysulfide, dimethyl sulfoxide (DMSO), methyl methanesulfonate, ethyl methanesulfonate, propyl methanesulfonate, propenyl propenesulfonate, propenyl cyanoethansulfonate, ethylene sulfate, bicyclo-glyoxal sulfate, and methyl sulfate.

The sulfur-containing organic compound may be included in an amount of 0.01 to 0.1 parts by weight with respect to 100 parts by weight of the first mixed solution dehydrated in the dehydration process. Specifically, the sulfur-containing organic compound may be included in an amount of 0.02 to 0.08 parts by weight, and more specifically, 0.03 to 0.06 parts by weight. When the sulfur-containing organic compound is included in an amount of less than 0.01 parts by weight, the content of the sulfur component supplied is small, such that the effect of preventing deactivation of the molybdenum-based hydrotreating catalyst may be insufficient.

The hydrotreating refers to a hydrogenation reaction that occurs by adding a reaction gas including hydrogen gas ($H_2$) to the second mixed solution in which the first mixed solution dehydrated in the dehydration process and the sulfur source are mixed in the presence of a molybdenum-based hydrotreating catalyst. Specifically, the hydrotreating may refer to hydrotreating, which is known in the related art, including a hydrodesulfurization reaction, a hydrocracking reaction, a hydrodechlorination reaction, a hydrodenitrogenation reaction, a hydrodeoxygenation reaction, and a hydrodemetallization reaction. Through the hydrotreating, impurities including chlorine (Cl), nitrogen (N), and oxygen (O), and some olefins may be removed, other metal impurities may also be removed, and a by-product containing the impurities is produced.

The by-product is produced by reacting impurities such as chlorine (Cl), nitrogen (N), sulfur (S), or oxygen (O) included in the waste plastic pyrolysis oil with hydrogen gas ($H_2$). Specifically, the by-product may include hydrogen sulfide gas ($H_2S$), hydrogen chloride (HCl), ammonia ($NH_3$), water vapor ($H_2O$), or the like, and in addition, may include unreacted hydrogen gas ($H_2$), and a trace of methane ($CH_4$), ethane ($C_2H_6$), propane ($C_3H_8$), butane ($C_4H_{10}$), or the like.

The molybdenum-based hydrotreating catalyst may be a catalyst in which a molybdenum-based metal, or a metal including one or two or more selected from nickel, cobalt, and tungsten, and a molybdenum-based metal are supported on a support. The molybdenum-based hydrotreating catalyst has high catalytic activity during hydrotreating, and the molybdenum-based hydrotreating catalysts may be used alone or, if necessary, in the form of a two-way catalyst combined with a metal such as nickel, cobalt, or tungsten.

As the support, alumina, silica, silica-alumina, titanium oxide, a molecular sieve, zirconia, aluminum phosphate, carbon, niobia, or a mixture thereof may be used.

The molybdenum-based hydrotreating catalyst may include a molybdenum-based sulfide hydrotreating catalyst. For example, the molybdenum-based hydrotreating catalyst may include molybdenum sulfide (MoS) or molybdenum disulfide ($MoS_2$), and may include a known molybdenum-based sulfide hydrotreating catalyst.

The reaction gas may further include hydrogen sulfide gas ($H_2S$). The hydrogen sulfide gas ($H_2S$) included in the reaction gas may act as a sulfur source, and may regenerate the activity of the molybdenum-based hydrotreating catalyst deactivated during the refining process together with the sulfur source mixed with the waste plastic pyrolysis oil.

The hydrotreating may be performed at a pressure of 150 bar or less. Specifically, the hydrotreating may be performed at a pressure of 120 bar or less, more specifically, 100 bar or less, 50 bar or more. When the hydrotreating is performed under a pressure condition of more than 150 bar, as ammonia and hydrogen chloride are produced in excess during the hydrotreating, an ammonium salt formation temperature increases, and as a result, a differential pressure of a reactor or the like in the process may be easily caused, and the process stability may be significantly reduced. By controlling the content of nitrogen and chlorine in the waste plastic pyrolysis oil, the increase in ammonium salt formation temperature may be partially suppressed even under a condition of a pressure of more than 150 bar.

The hydrotreating may be performed at a temperature of 150°C to 500°C. When the temperature satisfies the above range, the hydrotreating efficiency may be improved. Specifically, the hydrotreating may be performed at a temperature of 200°C to 400°C.

The hydrotreating may be performed in multiple stages, and as a specific example, may be performed in two stages. When the hydrotreating is performed in two stages, the first stage may be performed at a lower temperature than the second stage. In this case, the first stage may be performed at a temperature of 150°C to 300°C, and specifically, 200°C to 250°C, and the second stage may be performed at a temperature of 300°C to 500°C, and specifically, 350°C to 400°C.

The method for producing refined hydrocarbons from waste plastics according to the present invention may further include, after the hydrotreating process, subjecting a stream including the refined pyrolysis oil from which the impurities are removed to gas-liquid separation and then washing the gas-liquid separated stream with water.

The stream including the refined pyrolysis oil from which the impurities are removed may contain hydrogen chloride, ammonia, unreacted hydrogen gas, and the like, in addition to the refined pyrolysis oil from which the impurities are removed discharged from a rear end of the reactor where the hydrotreating process is performed.

Through the gas-liquid separation, from the stream including the refined pyrolysis oil from which the impurities are removed, ammonia and hydrogen chloride produced by the hydrotreating may be removed, and unreacted hydrogen gas may be recovered.

The gas-liquid separation may be performed by a method known in the art using a separator 24.

The gas-liquid separation may be performed two to four times, specifically, three or four times, and more specifically, four times. When the above range is satisfied, the formation of the ammonium salt may be minimized even under a low-temperature condition for oil-water separation because the refined pyrolysis oil contains traces of $NH_3$ and hydrogen chloride. In addition, oil refining and petrochemical processes using the refined oil as a feedstock may be stably performed without adding an additional salt remover to the refined pyrolysis oil later.

A gas stream produced as a result of the gas-liquid separation may include off-gas containing light hydrocarbons, hydrogen sulfide, ammonia, hydrogen chloride, or the like, and unreacted hydrogen gas. According to a method known in the art, the off-gas and the unreacted hydrogen gas are separated, and the separated unreacted hydrogen gas is recirculated in the process, and the off-gas is treated through a step described below and may be used as fuel or discharged into the atmosphere.

Through the water washing, a salt included in the gas stream may be dissolved and removed, or salt formation may be suppressed by dissolving gas that may form a salt.

The water washing may be performed two to four times, and specifically, two or three times. When the above range is satisfied, the salt removal and salt formation suppression effect may be sufficiently exhibited, such that high-quality refined pyrolysis oil may be obtained, and the process stability may be secured.

The method for producing refined hydrocarbons from waste plastics may further include, after the subjecting of the stream including the refined pyrolysis oil from which the impurities are removed to the gas-liquid separation and then the washing of the gas-liquid separated stream with water: combusting the separated off-gas; and processing uncombusted off-gas.

The off-gas may contain C1-C4 light hydrocarbons, hydrogen sulfide ($H_2S$), ammonia ($NH_3$), and the like. Therefore, in order to use the off-gas as fuel, it is required to combust the off-gas to remove hydrogen sulfide ($H_2S$), ammonia ($NH_3$), and the like. Exhaust gas containing sulfur dioxide ($SO_2$), nitrogen dioxide ($NO_2$), and the like, produced by combustion of the off-gas may be discharged into the atmosphere after performing caustic scrubbing to meet emission standards.

In addition, after the combusting of the separated off-gas, uncombusted off-gas may be discharged as wastewater by being subjected to sour water stripping, adsorption, biological treatment, oxidation, amine scrubbing, or caustic scrubbing.

The method for producing refined hydrocarbons from waste plastics may include a distillation process (P-106) and may include processes applicable in an oil refining process or a petrochemical process.

In an embodiment, the refined pyrolysis oil may be mixed with petroleum hydrocarbons and distilled as mixed oil.

The petroleum hydrocarbon refers to a mixture of naturally occurring hydrocarbons or a compound separated from the mixture. Specifically, the petroleum hydrocarbon may be at least one selected from the group consisting of crude oil and hydrocarbons derived from crude oil.

According to an embodiment, the distillation may be performed in at least one process selected from the group consisting of a crude distillation unit (CDU) and a vacuum distillation unit (VDU).

According to an embodiment, in the distillation process (P-106), refined hydrocarbons may be obtained in the form of naphtha at a boiling point of 150°C or lower, kerosene at a boiling point of 150 to 265°C, light gas oil (LGO) at a boiling point of 265 to 340°C, and vacuum gas oil (VGO) at a boiling point of 340°C or higher.

In an embodiment, the refined pyrolysis oil may be included in an amount of 60 wt% or less, 50 wt% or less, or 40 wt% or less, with respect to the total weight of the mixed oil.

In addition, the present invention relates to a a system for producing refined hydrocarbons from waste plastics.

The system is preferably configured to carry out a method of the invention, and reference can in this regard be made to the description above.

The system includes: a pretreatment device configured for pretreating waste plastics; a pyrolysis reactor configured for receiving the waste plastics pretreated in the pretreatment device and for producing pyrolysis gas; a hot filter configured for receiving the pyrolysis gas and for producing pyrolysis oil; a connection pipe connecting the hot filter and the pyrolysis reactor so that a liquid condensed in the hot filter can be re-introduced into the pyrolysis reactor; a dehydration device configured for dehydrating a first mixed solution obtained by mixing the produced pyrolysis oil with washing water and a demulsifier by applying a voltage to the first mixed solution; a hydrotreating device configured for hydrotreating a second mixed solution obtained by mixing the dehydrated first mixed solution with a sulfur source to produce refined pyrolysis oil from which impurities are removed; and a distillation device configured for distilling the refined pyrolysis oil to obtain refined hydrocarbons.

The system may produce high-value-added pyrolysis oil having a high proportion of light hydrocarbons from waste plastics containing a large amount of impurities, and may produce refined hydrocarbons having a high proportion of light hydrocarbons therefrom. In addition, the system may improve a yield of the pyrolysis oil obtained from waste plastics.

According to an embodiment, the hot filter may be filled with beads. When the hot filter is filled with beads, an inert effect and a heat transfer effect in the hot filter are maximized, which makes it possible to produce pyrolysis oil having a high proportion of light hydrocarbons. In addition, the pyrolysis oil yield may be improved.

According to an embodiment, the beads may include at least one selected from the group consisting of silica sand ($SiO_2$) and aluminum oxide ($Al_2O_3$).

According to an embodiment, the system may further include at least two heaters 17 provided outside the hot filter. In addition, the system may include at least three heaters outside the hot filter. When at least two heaters 17 are provided outside the hot filter, a temperature gradient of the hot filter may be easily formed, and the temperatures at the top, middle, and bottom of the hot filter may be flexibly adjusted depending on operating conditions of the hot filter, such that a flexible process operation may be performed.

The dehydrator 22 according to an embodiment may be provided with a vertical electrode. The number of vertical electrodes provided in the dehydrator according to an embodiment may be at least two, specifically, four or more, more specifically, six or more, and/or as an upper limit, twenty or fewer.

The dehydrator 22 may include a coalescer therein. The coalescer is a device that collects fine droplets to form large droplets, and any device commonly used in the industry may be used.

The first mixed solution dehydrated in the dehydrator 22 may be introduced into the coalescer, and an additionally dehydrated first mixed solution may be produced. When a dehydrator 22 including the coalescer is used, it goes without saying that the additionally dehydrated first mixed solution is introduced into the hydrotreating reactor 23 together with the hydrogen gas.

The system may further include a separator 24 configured for subjecting the refined pyrolysis oil from which the impurities are removed to gas-liquid separation, the refined pyrolysis oil being produced in the hydrotreating reactor 23.

The number of separators may be two to four, specifically, three or four, and more specifically, four. When the above range is satisfied, the formation of the ammonium salt may be minimized even under a low-temperature condition for oil-water separation because the refined pyrolysis oil contains traces of $NH_3$ and hydrogen chloride. In addition, oil refining and petrochemical processes using the refined pyrolysis oil as a feedstock may be stably performed without adding an additional salt remover to the refined pyrolysis oil later.

The system may further include a recycle gas compressor configured for recovering unreacted hydrogen gas from the separated gas stream from the separator 24 and for adding the recovered unreacted hydrogen gas to the hydrotreating reactor 23.

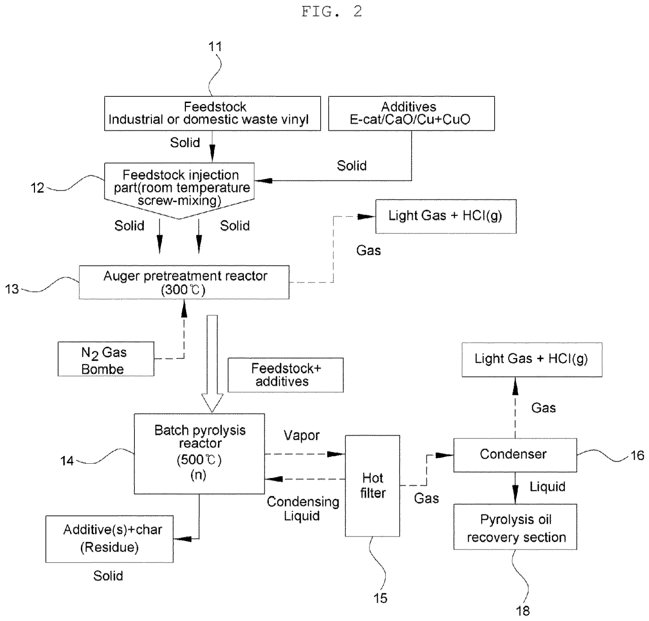

Referring to Figure 2, a feedstock 11 was injected into a feedstock injection part 12 and screw-mixing was performed. The crushed waste plastics and additive(s) were introduced into an auger pretreatment reactor 13, and then a pretreatment was performed. The pretreated waste plastics were introduced into pyrolysis reactor 14, and pyrolysis was performed, thereby producing pyrolysis gas. The produced pyrolysis gas was introduced into a hot filter 15 and then lightened. And then the lightened pyrolysis gas was introduced into condenser 16 and pyrolysis oil was obtained in a pyrolysis oil recovery section 18. A liquid condensed in the hot filter 15 was re-introduced into the pyrolysis reactor 14.

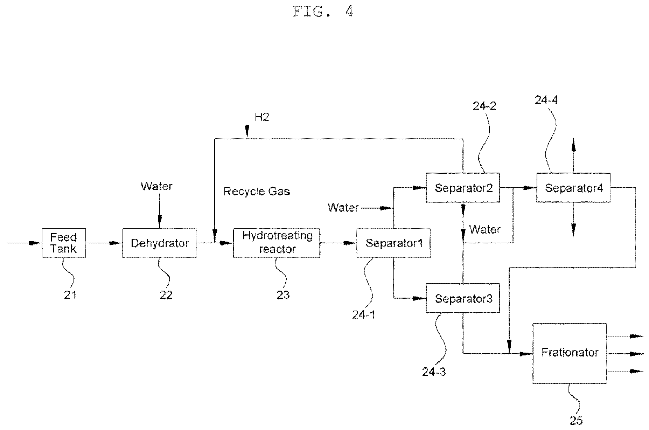

Referring to Figure 4, the obtained pyrolysis oil in a feed tank 21 was added to a dehydrator 22, and stirring was performed, thereby preparing a first mixed solution. The first mixed solution was separated into oil and water by applying an alternating voltage through a vertical electrode, and then dehydration was performed by removing the water layer. A second mixed solution was prepared by mixing dimethyl disulfide and the first mixed solution dehydrated in the dehydrator 22, and then the second mixed solution was hydrotreated in a hydrotreating reactor 23. And then hydrotreated pyrolysis oil was introduced into separator1 24-1 to separate liquid and gas from hydrotreated pyrolysis oil. Liquid from separator1 24-1 was introduced to separators 24-3 and then introduced to fractionator 25. Gas from separator1 24-1 was introduced to separator2 24-2. Impurities including $NH_3$ and HCl in the gas from separator1 24-1 were removed in separator2 24-2 along with water. After further separation in separator4 24-4, the recovered oil in the gas is introduced into the fractionator 25, thereby producing refined pyrolysis oil from which impurities were removed.

Hereinafter, examples of the present invention will be further described with reference to specific experimental examples.

[Example 1]

78.8 wt% of PE, 11.6 wt% of PP, 3.1 wt% of PVC, 2.4 wt% of PET, 2.1 wt% of nylon, and 2.0 wt% of PU contained in domestic waste plastics were used as a feedstock.

1,020 g of the domestic waste plastic feedstock was injected into a feedstock injection part and screw-mixing was performed. The crushed waste plastics and CaO were introduced into an auger reactor at 200 g/hr and 10 g/hr, respectively, and then a pretreatment was performed at a screw speed of 10 rpm, a nitrogen flow rate of 3 cc/min, 300°C, and a residence time of 1 hr.

The pretreated waste plastics were introduced into a rotary kiln batch pyrolysis reactor, and pyrolysis was performed at a rotary kiln rotation speed of 4 rpm and 430°C, thereby producing pyrolysis gas.

The produced pyrolysis gas was introduced into a 1.3 L hot filter not filled with glass beads and then lightened, and then pyrolysis oil was obtained in a recovery section. A liquid condensed in the hot filter was re-introduced into the pyrolysis reactor.

The obtained pyrolysis oil, washing water, and polyethylene glycol having a weight average molecular weight of 500 were added to a dehydrator under conditions of 150°C and 10 bar at a volume ratio of 1:0.25:0.001, and stirring was performed, thereby preparing a first mixed solution. The first mixed solution was separated into oil and water by applying an alternating voltage of 15 kV through a vertical electrode, and then dehydration was performed by removing the water layer.

At this time, in the dehydrator, high concentrations of impurities contained in the pyrolysis oil, such as about 5,000 ppm or more of moisture, 500 ppm or more of nitrogen (N), 200 ppm or more of chlorine (Cl), and 20 vol% or more of olefins, were treated.

A second mixed solution was prepared by mixing dimethyl disulfide in an amount of 0.04 parts by weight with respect to 100 parts by weight of the first mixed solution dehydrated in the dehydrator, and then the second mixed solution was hydrotreated under conditions of 300°C and 70 bar, thereby producing refined pyrolysis oil from which impurities were removed.

The refined pyrolysis oil was introduced into a crude distillation unit (CDU) and then distilled, and refined hydrocarbons were obtained in the form of naphtha at a boiling point of 150°C or lower, kerosene at a boiling point of 150 to 265°C, light gas oil (LGO) at a boiling point of 265 to 340°C, and vacuum gas oil (VGO) at a boiling point of 340°C or higher. The pyrolysis oil yield is shown in Table 1, the weight ratio of the refined hydrocarbons is shown in Table 2, and the measurement result of the impurity content in the refined pyrolysis oil is shown in Table 3-1 and 3-2.

[Example 2]

A process was performed in the same manner as that of Example 1, except that a 1.3 L hot filter was filled with glass beads having a diameter of 3 mm at 88 vol% with respect to the internal volume of the hot filter, and the top temperature, the middle temperature, and the bottom temperature of the hot filter were maintained at 430°C.

[Example 3]

A process was performed in the same manner as that of Example 1, except that a 1.3 L hot filter was filled with glass beads having a diameter of 3 mm at 88 vol% with respect to the internal volume of the hot filter, the top temperature of the hot filter was maintained at 430°C, and the middle temperature and the bottom temperature of the hot filter were maintained at 500°C.

[Example 4]

A process was performed in the same manner as that of Example 1, except that a 1.3 L hot filter was filled with glass beads having a diameter of 3 mm at 88 vol% with respect to the internal volume of the hot filter, the top temperature of the hot filter was maintained at 430°C, the middle temperature of the hot filter was maintained at 450°C, and the bottom temperature of the hot filter was maintained at 500°C.

[Examples 5 and 6]

Refined pyrolysis oil from which impurities were removed was produced under the same conditions as those in Example 1, except that the waste plastic pyrolysis oil, washing water, and polyethylene glycol were added to the dehydrator at the volume ratio shown in Table 1 in Example 1.

[Example 7]

Refined pyrolysis oil from which impurities were removed was produced under the same conditions as those in Example 1, except that a direct current voltage was applied through a horizontal electrode in Example 1.

[Example 8]

Refined pyrolysis oil from which impurities were removed was produced under the same conditions as those in Example 1, except that the dehydration of the first mixed solution was performed under a temperature condition of 120°C.

[Example 9]

Refined pyrolysis oil from which impurities were removed was produced under the same conditions as those in Example 1, except that the waste plastic pyrolysis oil and polyethylene glycol were added at a volume ratio of 1:0.0001 in Example 8 and the hydrotreating was performed under a condition of a pressure of 180 bar.

[Example 10]

Refined pyrolysis oil from which impurities were removed was produced under the same conditions as those in Example 1, except that after the first mixed solution was dehydrated, the first mixed solution was additionally dehydrated through a coalescer.

[Example 11]

A process was performed in the same manner as that of Example 1, except that mixed oil obtained by mixing the refined pyrolysis oil and crude oil at a weight ratio of 5:5 was introduced into a crude distillation unit (CDU).

[Comparative Example 1]

A process was performed in the same manner as that of Example 1, except that the liquid condensed in the hot filter was not re-introduced into the pyrolysis reactor.

[Comparative Example 2]

Refined pyrolysis oil from which impurities were removed was produced under the same conditions as those in Example 1, except that washing water was not added in the refined pyrolysis oil.

[Comparative Example 3]

Refined pyrolysis oil from which impurities were removed was produced under the same conditions as those in Example 1, except that polyethylene glycol was not added in in the refined pyrolysis oil.

[Comparative Example 4]

Refined pyrolysis oil from which impurities were removed was produced under the same conditions as those in Example 1, except that a voltage was not applied to the first mixed solution.

[Comparative Example 5]

Refined pyrolysis oil from which impurities were removed was produced under the same conditions as those in Example 1, except that dimethyl disulfide was not mixed with the dehydrated first mixed solution.

Evaluation Examples

[Measurement Methods]

The composition of the waste plastic feedstock was analyzed using Flake analyzer available from RTT System GmbH, Germany, among NIR analyzers.

GC-Simdis analysis, HT 750, was performed to confirm the composition of pyrolyzed products related to pyrolysis oil yield measurement.

In order to analyze the contents of moisture and impurities such as Cl, S, N, and O in the mixed solution obtained after the dehydration process was completed and the contents of impurities such as Cl, S, N, and O in the finally obtained refined pyrolysis oil, ICP, TNS, EA-O, and XRF analysis were performed. The total content of Cl was measured according to ASTM D5808, the content of N was measured according to ASTM D4629, and the content of S was measured according to ASTM D5453.

The catalytic activity duration was measured and expressed in hours based on the time point when the content of nitrogen in the refined pyrolysis oil exceeded 10 ppm by performing Total Nitrogen & Sulfur (TNS element) analysis on the refined pyrolysis oil.

In addition, the process of each of Examples and Comparative Examples was operated for three months, and a particle adhesion rate was measured according to the following Equation 1.

[Equation 1]

Particle adhesion rate (%) = (Weight of impurity particles adhering to electrode/Weight of impurity particles in pyrolysis oil) x 100

The pyrolysis oil yield and the weight ratio of the refined hydrocarbons according to each of Examples and Comparative Examples are shown in Tables 1 and 2, respectively.

[Table 1]

|  | Comparative Example 1 | Example 1 | Example 2 | Example 3 | Example 4 |
|---|---|---|---|---|---|
| Pyrolysis oil yield (wt%) | 52.1 | 55.1 | 57.0 | 60.8 | 62.4 |

[Table 2]

| Weight ratio of refined hydrocarbons (wt%) | Comparative Example 1 | Example 1 | Example 2 | Example 3 | Example 4 |
|---|---|---|---|---|---|
| Naphtha | 26.9 | 32.5 | 40.5 | 45.5 | 45.7 |
| Kerosene | 32.5 | 35.5 | 33.6 | 39.4 | 41.8 |
| LGO | 21.0 | 17.8 | 13.0 | 7.8 | 8.1 |
| VGO | 19.6 | 14.2 | 12.9 | 7.3 | 4.4 |
| Total of naphtha and kerosene | 59.4 | 68.0 | 74.1 | 84.9 | 87.5 |

In Comparative Example 1 in which the hot filter was not filled with beads and the liquid condensed in the hot filter was not re-introduced into the pyrolysis reactor, it was confirmed that the pyrolysis oil yield and the proportion of light oil including naphtha and kerosene were the lowest.

In the case of Example 1 in which the liquid condensed in the hot filter was re-introduced into the pyrolysis reactor, it was confirmed that an excellent pyrolysis oil yield and an excellent proportion of light hydrocarbons including naphtha and kerosene were achieved compared to Comparative Example 1.

In Example 2 in which the liquid condensed in the hot filter was re-introduced into the pyrolysis reactor and the hot filter was filled with beads, it was confirmed that the pyrolysis oil yield and the proportion of light hydrocarbons including naphtha and kerosene were superior to those in Example 1.

In Examples 3 and 4 in which the liquid condensed in the hot filter was re-introduced into the pyrolysis reactor, the hot filter was filled with beads, and a temperature gradient was formed in the hot filter, the pyrolysis oil yield and the proportion of light hydrocarbons including naphtha and kerosene were superior to those in Examples 1 and 2.

In particular, in Example 4 in which the top temperature, the middle temperature, and the bottom of the hot filter were maintained at 430°C, 450°C, and 500°C, respectively, it was confirmed that the pyrolysis oil yield and the proportion of light hydrocarbons including naphtha and kerosene were the highest.

In addition, the measurement results of the contents of impurities in the refined pyrolysis oil according to Examples and Comparative Examples are shown in Table 3-1 and 3-2.

[Table 3-1]

| | | Example 1 | Example 5 | Example 6 | Example 7 | Example 8 | Example 9 | Example 10 |
|---|---|---|---|---|---|---|---|---|
| Dehydration | Washing water (volume ratio) | 0.25 | 0.50 | 0.25 | 0.25 | 0.25 | 0.25 | 0.25 |
| | Demulsifier (volume ratio) | 0.0001 | 0.0001 | 0.00001 | 0.0001 | 0.0001 | 0.00001 | 0.0001 |
| | Temperature (°C) | 150 | 150 | 150 | 150 | 120 | 120 | 150 |
| | Pressure (bar) | 10 | 10 | 10 | 10 | 10 | 10 | 10 |
| | Voltage — Type | AC | AC | AC | DC | AC | AC | AC |
| | Voltage — Electrode | Vertical | Vertical | Vertical | Horizontal | Vertical | Vertical | Vertical |
| | Presence or absence of coalescer | × | × | × | × | × | × | ○ |
| Hydrotreating | Whether sulfur source is mixed or not | ○ | ○ | ○ | ○ | ○ | ○ | ○ |
| | Temperature (°C) | 300 | 300 | 300 | 300 | 300 | 300 | 300 |
| | Pressure (bar) | 70 | 70 | 70 | 70 | 70 | 180 | 70 |
| Content of moisture after dehydration (ppm) | | 592 | 783 | 672 | 595 | 721 | 895 | 510 |
| Content of Cl after dehydration (ppm) | | 126 | 123 | 137 | 125 | 144 | 165 | 108 |
| Content of N after dehydration (ppm) | | 836 | 814 | 858 | 839 | 866 | 947 | 770 |
| Catalytic activity duration (hr) | | >720 | >720 | >720 | >720 | >720 | >720 | >720 |
| Content of Cl in refined pyrolysis oil (ppm) | | <1 | <1 | <1 | <1 | <1 | <1 | <1 |
| Content of N in refined pyrolysis oil (ppm) | | <1 | <1 | <1 | <1 | <1 | <1 | <1 |
| Particle adhesion rate (%) | | 0.20 | 0.18 | 0.20 | 3.5 | 0.21 | 0.20 | 0.18 |

[Table 3-2]

| | | | Comparative Example 2 | Comparative Example 3 | Comparative Example 4 | Comparative Example 5 |
|---|---|---|---|---|---|---|
| Dehydration | Washing water (volume ratio) | | - | 0.25 | 0.25 | 0.25 |
| | Demulsifier (volume ratio) | | 0.0001 | - | 0.0001 | 0.0001 |
| | Temperature (°C) | | 150 | 150 | 150 | 150 |
| | Pressure (bar) | | 10 | 10 | 10 | 10 |
| | | Tye | AC | AC | - | AC |
| | | voltage | Vertical | Vertical | - | Vertical |
| | Presence or absence of coalescer | | × | × | × | × |
| Hydrotreating | Whether sulfur source is mixed or not | | ○ | ○ | ○ | × |
| | Temperature (°C) | | 300 | 300 | 300 | 300 |
| | Pressure (bar) | | 70 | 70 | 70 | 70 |
| Content of moisture after dehydration (ppm) | | | 2485 | 4416 | 3840 | 610 |
| Content of Cl after dehydration (ppm) | | | 229 | 250 | 247 | 126 |
| Content of N after dehydration (ppm) | | | 1049 | 1100 | 1090 | 847 |
| Catalytic activity duration (hr) | | | <576 | <576 | <576 | <336 |
| Content of Cl in refined pyrolysis oil (ppm) | | | 4.4 | 5.9 | 4.7 | 3.2 |
| Content of N in refined pyrolysis oil (ppm) | | | 11.4 | 14.5 | 12.4 | 11 |
| Particle adhesion rate (%) | | | 0.24 | 0.21 | - | 0.20 |

As shown in Table 3-1 and 3-2, in Comparative Examples 2 to 4, the addition of washing water, addition of demulsifier, and application of voltage were set differently from Examples, and as a result, moisture and Cl removal was poor. Accordingly, the catalyst was adversely affected in the hydrotreating process, and the content of Cl in the finally obtained refined pyrolysis oil was high. In Comparative Example 5, it was confirmed that although moisture and some impurities in the pyrolysis oil were sufficiently removed in the dehydration process, the hydrotreating catalyst was deactivated within a short time due to an insufficient content of sulfur, and thus, the refining process was difficult to be maintained for a long period of time.

However, in Examples 1 and 5 to 10, a significant amount of moisture contained in the pyrolysis oil was removed through the dehydration process, and a sulfur source was added, and as a result, the activity of the hydrotreating catalyst was maintained for a remarkably long time. In addition, as some water-soluble impurities were preemptively removed in the dehydration process and the activity of the catalyst was maintained for a long period of time, high-quality refined pyrolysis oil having a significantly low content of impurities was obtained.

Meanwhile, when an alternating voltage was applied using a vertical electrode, it was confirmed that the adhesion rate of impurity particles derived from char in the pyrolysis oil to the electrode surface was significantly low even when the process was continued for longer than three months. Through this, it was appreciated that when an alternating voltage was applied or a vertical electrode was used, there was no need to stop the process for washing the inside of the reactor, and as a result, more excellent process efficiency was exhibited.

In addition, in the case of Example 9, although the dehydration result was poor compared to other Examples, the content of Cl impurities in the refined pyrolysis oil was significantly low as the hydrotreating was performed under a high pressure condition. However, since ammonia and hydrogen chloride were produced in excess due to the high pressure, it was confirmed that a relatively large amount of ammonium salt was formed even at the temperature at which the hydrotreating was performed.

In Example 10, as the additional dehydration was performed using a coalescer, the content of moisture and chlorine after the dehydration were lower than those in other Examples, and therefore, it could be confirmed that the activation time of the catalyst, the process stability, and the quality of the refined pyrolysis oil were relatively superior to those in other Examples.

As set forth above, the method and system for producing refined hydrocarbons from waste plastics may produce high-value-added pyrolysis oil having a high proportion of light hydrocarbons from waste plastics containing a large amount of impurities, and may obtain refined hydrocarbons having a high proportion of light hydrocarbons therefrom.

According to an embodiment, the method and system for producing refined hydrocarbons from waste plastics may improve the yield of the pyrolysis oil obtained from waste plastics.

According to an embodiment, the method and system for producing refined hydrocarbons from waste plastics may produce high-value-added pyrolysis oil with reduced impurities from waste plastics containing a large amount of impurities, and may obtain refined hydrocarbons with reduced impurities therefrom.

According to another embodiment, the method and system for producing refined hydrocarbons from waste plastics may simplify the process when refined hydrocarbons are produced from waste plastics.

According to an embodiment, the method and system for producing refined hydrocarbons from waste plastics may produce high-value-added pyrolysis oil having a high proportion of light hydrocarbons that may be used as a feedstock for blending with existing petroleum products or an oil refining process due to its excellent quality, and may obtain refined hydrocarbons having a high proportion of light hydrocarbons therefrom.

According to an embodiment, the method and system for producing refined hydrocarbons from waste plastics may prevent or minimize formation of an ammonium salt ($NH_4Cl$) and may prevent the adhesion phenomenon of impurity particles when refining waste plastic pyrolysis oil containing impurities including chlorine and nitrogen.

According to an embodiment, the method and system for producing refined hydrocarbons from waste plastics may prevent deactivation of the catalyst due to moisture, such that the refining efficiency may be excellent, and the process may be operated for a long period of time.

According to an embodiment, the method and system for producing refined hydrocarbons from waste plastics may provide waste plastic pyrolysis oil that has significantly low contents of impurities such as chlorine, nitrogen, oxygen, and metals, and olefins, and has excellent quality, and thus, may be used as a feedstock for blending with existing petroleum products or oil refining and petrochemical processes.

According to an embodiment, the method and system for producing refined hydrocarbons from waste plastics may be used to produce eco-friendly petrochemical products using waste plastics.

List of numerals

P-101 pretreatment process
P-102 pyrolysis process
P-103 lightening process
P-104 dehydration process
P-105 hydrotreating process
P-106 distillation process
11 feedstock
12 feedstock injection part
13 auger pretreatment reactor
14 pyrolysis reactor
15 hot filter
16 condenser
17 heater
18 pyrolysis oil recovery section
21 feed tank
22 dehydrator
23 hydrotreating reactor
24-1 separator1
24-2 separator2

24-3 separators
24-4 separator4
25 fractionator

**Claims**

1.  A method for producing refined hydrocarbons from waste plastics, the method comprising:

    a pretreatment process of pretreating waste plastics;
    a pyrolysis process of producing pyrolysis gas by introducing the waste plastics pretreated in the pretreatment process into a pyrolysis reactor;
    a lightening process of producing pyrolysis oil by introducing the pyrolysis gas from the pyrolysis process into a hot filter;
    a dehydration process of dehydrating a first mixed solution obtained by mixing the produced pyrolysis oil with washing water and a demulsifier by applying a voltage to the first mixed solution;
    a hydrotreating process of hydrotreating a second mixed solution obtained by mixing the dehydrated first mixed solution with a sulfur source to produce refined pyrolysis oil from which impurities are removed; and
    a distillation process of distilling the refined pyrolysis oil to obtain refined hydrocarbons,
    wherein a liquid condensed in the hot filter is re-introduced into the pyrolysis reactor.

2.  The method of claim 1, wherein the hot filter is filled with beads.

3.  The method of claim 2, wherein the beads include at least one selected from the group consisting of silica sand ($SiO_2$) and aluminum oxide ($Al_2O_3$).

4.  The method of any preceding claim, wherein a temperature gradient is formed in the hot filter.

5.  The method of claim 4, wherein the temperature gradient is formed by providing at least two heaters outside the hot filter.

6.  The method of any preceding claim, wherein the pyrolysis reactor includes at least two batch reactors.

7.  The method of claim 6, wherein the pyrolysis process is performed by a switching operation of the at least two batch reactors.

8.  The method of any preceding claim, wherein the refined pyrolysis oil is mixed with petroleum hydrocarbons and a mixed oil of the refined pyrolysis oil with the petroleum hydrocarbons is distilled.

9.  The method of claim 8, wherein the refined pyrolysis oil is included in an amount of 50 wt% or less with respect to a total weight of the mixed oil.

10. The method of any preceding claim, wherein the waste plastics include at least one selected from the group consisting of polyethylene (PE), polypropylene (PP), polyethylene terephthalate (PET), polyvinyl chloride (PVC), and polystyrene (PS) .

11. The method of any preceding claim, wherein in the dehydration process, the first mixed solution has a greater volume of the pyrolysis oil then the washing water.

12. The method of any preceding claim, wherein in the dehydration process, a volume ratio of the pyrolysis oil and the washing water mixed in the first mixed solution ranges from 1:0.001 to 1:0.5.

13. The method of any preceding claim, wherein in the dehydration process, a volume ratio of the pyrolysis oil and the demulsifier mixed in the first mixed solution ranges from 1:0.000001 to 1:0.001.

14. The method of any preceding claim, wherein the demulsifier is one or a mixture of two or more selected from the group consisting of polyethylene glycol, tert-butanol, acetone, alkylnaphthalene sulfonate, alkylbenzene sulfonate, a nonionic alkoxylated alkyl phenol resin, polyalkylene oxide, and polyoxyethylene sorbitan ester.

15. A system for producing refined hydrocarbons from waste plastics, the system comprising:

a pretreatment device configured for pretreating waste plastics;

a pyrolysis reactor configured for receiving the waste plastics pretreated in the pretreatment device and for producing pyrolysis gas;

a hot filter configured for receiving the pyrolysis gas and for producing pyrolysis oil;

a connection pipe connecting the hot filter and the pyrolysis reactor so that a liquid condensed in the hot filter can be re-introduced into the pyrolysis reactor;

a dehydration device configured for dehydrating a first mixed solution obtained by mixing the produced pyrolysis oil with washing water and a demulsifier by applying a voltage to the first mixed solution;

a hydrotreating device configured for hydrotreating a second mixed solution obtained by mixing the dehydrated first mixed solution with a sulfur source to produce refined pyrolysis oil from which impurities are removed; and

a distillation device configured for distilling the refined pyrolysis oil to obtain refined hydrocarbons.

FIG. 1

```
┌─────────────────┐
│     P - 101     │
└─────────────────┘
         │
         ▼
┌─────────────────┐
│     P - 102     │
└─────────────────┘
         │
         ▼
┌─────────────────┐
│     P - 103     │
└─────────────────┘
         │
         ▼
┌─────────────────┐
│     P - 104     │
└─────────────────┘
         │
         ▼
┌─────────────────┐
│     P - 105     │
└─────────────────┘
         │
         ▼
┌─────────────────┐
│     P - 106     │
└─────────────────┘
```

FIG. 2

11

| Feedstock<br>Industrial or domestic waste vinyl | Additives<br>E-cat/CaO/Cu+CuO |

Solid

Solid

12 — Feedstock injection part(room temperature screw-mixing)

Solid ↓ ↓ Solid

- - → Light Gas + HCl(g)

Gas

13 — Auger pretreatment reactor (300℃)

N₂ Gas Bombe

Feedstock+ additives

Light Gas + HCl(g)

Gas

14 — Batch pyrolysis reactor (500℃) (n)

Vapor

Hot filter

Gas

Condenser — 16

Liquid

Condensing Liquid

Additive(s)+char (Residue)

Pyrolysis oil recovery section

Solid

15

18

FIG. 3

FIG. 4

Europäisches
Patentamt

European
Patent Office

Office européen
des brevets

## EUROPEAN SEARCH REPORT

Application Number

EP 24 16 3089

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 101 916 404 B1 (UNIV SEOUL IND COOP FOUND [KR]) 8 November 2018 (2018-11-08) * claims 1-15 * * paragraphs [0042], [0111] * * figure 2 * | 1-15 | INV. C10G1/00 C10G1/10 C10G25/00 C10G31/09 C10G31/08 C10G67/14 |
| | - - - - - | | |
| A | KR 2021 0057722 A (QUANTAFUEL AS [NO]) 21 May 2021 (2021-05-21) * claims 1, 8, 16 * * paragraphs [0062], [0111] - [0118] * | 1-15 | |
| | - - - - - | | |
| A | WO 2023/009398 A1 (PACT FUEL LLC [US]) 2 February 2023 (2023-02-02) * claims 1, 22, 31, 32 * * paragraphs [0041], [0053], [0056] * | 1-15 | |
| | - - - - - | | |
| A | KR 102 206 106 B1 (UNIV INDUSTRY FOUNDATION YONSEI UNIV WONJU CAMPUS [KR]) 20 January 2021 (2021-01-20) * claims 1, 6 * * paragraphs [0041], [0059], [0050], [0052] * | 1-15 | |
| | - - - - - | | |

TECHNICAL FIELDS
SEARCHED (IPC)

C10G

The present search report has been drawn up for all claims

| Place of search | Date of completion of the search | Examiner |
|---|---|---|
| The Hague | 3 September 2024 | Pardo Torre, J |

## ANNEX TO THE EUROPEAN SEARCH REPORT
## ON EUROPEAN PATENT APPLICATION NO.

EP 24 16 3089

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2024

| Patent document cited in search report | | Publication date | Patent family member(s) | | Publication date |
|---|---|---|---|---|---|
| KR 101916404 | B1 | 08-11-2018 | KR 101916404 | B1 | 08-11-2018 |
| | | | WO 2019004560 | A1 | 03-01-2019 |
| KR 20210057722 | A | 21-05-2021 | AU 2019297562 | A1 | 28-01-2021 |
| | | | AU 2023201128 | A1 | 30-03-2023 |
| | | | BR 112021000086 | A2 | 06-04-2021 |
| | | | CA 3104894 | A1 | 09-01-2020 |
| | | | CN 112912470 | A | 04-06-2021 |
| | | | EP 3818132 | A1 | 12-05-2021 |
| | | | KR 20210057722 | A | 21-05-2021 |
| | | | NO 20200042 | A1 | 10-01-2020 |
| | | | SG 11202013251T | A | 28-01-2021 |
| | | | US 2021269721 | A1 | 02-09-2021 |
| | | | WO 2020008050 | A1 | 09-01-2020 |
| WO 2023009398 | A1 | 02-02-2023 | EP 4377422 | A1 | 05-06-2024 |
| | | | WO 2023009398 | A1 | 02-02-2023 |
| KR 102206106 | B1 | 20-01-2021 | NONE | | |

EPO FORM P0459

For more details about this annex : see Official Journal of the European Patent Office, No. 12/82